# EUROPÄISCHE PATENTSCHRIFT

(11) **EP 2 215 191 B1**
(45) Veröffentlichungstag und Bekanntmachung des Hinweises auf die Patenterteilung: **07.01.2015**
(21) Anmeldenummer: 08855630.3
(22) Anmeldetag: 06.11.2008
(51) Int. Cl.: C10B 37/02, C10B 41/00, G01S 17/08

(54) **PLANIERVORRICHTUNG UND VERFAHREN ZUM BEFÜLLEN EINER OFENKAMMER EINER KOKSOFENBATTERIE**
LEVELLING DEVICE AND METHOD OF CHARGING AN OVEN CHAMBER OF A COKE OVEN BATTERY
DISPOSITIF DE NIVELLEMENT ET PROCÉDÉ DE REMPLISSAGE D'UNE CHAMBRE DE FOUR D'UNE BATTERIE DE FOURS À COKE

(30) Priorität: 28.11.2007 DE 102007057348
(43) Veröffentlichungstag der Anmeldung: 11.08.2010
(73) Patentinhaber: ThyssenKrupp Uhde GmbH, 44141 Dortmund (DE)
(72) Erfinder: SCHÜCKER, Franz-Josef, 44577 Castrop-Rauxel (DE); THOMAS, Peter, 41812 Erkelenz (DE)
(74) Vertreter: Albrecht, Rainer Harald
(86) Internationale Anmeldenummer: PCT/EP2008/009370
(87) Internationale Veröffentlichungsnummer: WO 2009/068161

(56) Entgegenhaltungen:
- EP-A- 0 130 170
- DE-A1-102005 007 163
- JP-A- 2005 239 787

## Beschreibung

Die Erfindung betrifft ein Verfahren zum Befüllen einer Ofenkammer einer Koksofenbatterie, wobei mittels zumindest einer an einer Planierstange angeordneten Messeinrichtung und einer an die Messeinrichtung angeschlossenen Recheneinheit während des Füllvorganges innerhalb der Ofenkammer der Schüttungsverlauf ermittelt wird und wobei abhängig von dem ermittelten Schüttungsverlauf eine zusätzliche Beschickung der Ofenkammer erfolgt. Gegenstand der Erfindung ist auch eine Planiervorrichtung zur Durchführung des Verfahrens.

In Kokereien werden die Ofenkammern einer Koksofenbatterien durch Fülllocher von einer auf der Koksoffenbatterie verfahrbar angeordneten Füllmaschine befüllt. Dabei erfolgt die Beschickung der einzelnen Fülllöcher üblicherweise über zugeordnete, drehzahlgesteuerte Förderschnecken, die die Kokskohle über Kohletrichter in die Ofenkammer füllen. Die Auslegung der Förderschnecken und die Einstellung für den Verlauf der Schneckendrehzahl während des Befüllvorganges sind insbesondere von dem Volumen der Ofenkammern, der angestrebten Füllzeit, der Füllsequenz der verschiedenen Ofenkammern einer Koksofenbatterie und der Größe der Kohletrichter der Füllmaschine abhängig. Um die Kokskohle der beim Befüllen gebildeten Schüttkegel gleichmäßig zu verteilen, ist eine Planiervorrichtung mit einer Planierstange vorgesehen, die in einem oberen Bereich der Ofenkammer durch eine Planieröffnung einer Ofenkammertür eingeführt und in Längsrichtung der Ofenkammer bewegt wird.

Aus der Praxis ist bekannt bei der Inbetriebnahme der Füllmaschine die mit einer Grundeinstellung für den Verlauf der Schneckendrehzahl erreichten Füllhöhen unterhalb der Fülllöcher zu bestimmen und daraus den Befüllungsgrad abzuschätzen, wobei anhand der Abschätzung eine Anpassung der Schneckendrehzahl erfolgt, um einen verbesserten Kohlebesatz zu erreichen. Die ermittelten Einstellungen dienen als Grundlage für den Dauerbetrieb der Koksofenbatterie und können durch wiederholte Messungen der Füllhöhe unterhalb der Fülllöcher oder durch die Bestimmung des Kokskuchenprofils beim Ausdrücken überprüft werden.

Ein Verfahren zum Befüllen einer Ofenkammer einer Koksofenbatterie mit den eingangs beschriebenen Merkmalen ist aus der DE 10 2005 007 164 A1 bekannt, wobei die einen Kontaktsensor aufweisende Messeinrichtung an dem Kopf der Planierstange angeordnet ist. Die Messeinrichtung detektiert das in Kontakttreten und das Außerkontakttreten mit einem durch die eingefüllte Kokskohle gebildeten Schüttkegel. Aus den Messsignalen wird von der Recheneinheit der Schüttungsverlauf ermittelt, wobei anhand dieser Informationen eine zusätzliche Beschickung der Ofenkammer erfolgen kann. Der Schüttungsverlauf kann dabei erst bestimmt werden, wenn die gebildeten Schüttkegel die Höhe der Planierstange erreichen und die Ofenkammer bereits weitgehend gefüllt ist. Die Genauigkeit des beschriebenen Verfahrens ist auch verbesserungsbedürftig, da die genaue Form der Schüttkegel ausgehend von den Signalen des Kontaktsensors nicht ermittelt werden kann. So kann die Steilheit der einzelnen Schüttkegel stark von der Größenverteilung und der Oberflächenstruktur der zur Verkokung eingesetzten Kokskahle abhängen und nicht ohne weiteres vorausbestimmt werden.

Aus der JP 2005-239 787 A und der EP 0 130 170 A2 ist jeweils ein Verfahren zum Befüllen einer Ofenkammer einer Koksofenbatterie bekannt, wobei mittels einer an einer Planierstange angeordneten Messeinrichtung der Schüttungsverlauf während des Füllvorgangs in Längsrichtung ermittelt wird Abhängig von dem in Längsrichtung ermittelten Profil kann eine zusätzliche Beschickung der Offenkammer erfolgen.

Aus der Druckschrift DE 10 2005 010 114 A1, die ein Verfahren und ein System zur Steuerung einer Bedienungseinrichtung eines Koksofens betrifft, ist bekannt, die Füllhöhe während des Befüllvorganges unterhalb der Fülllöcher einer Ofenkammer zu bestimmten. Anhand der so ermittelten Informationen kann der Schüttungsverlauf in Längsrichtung nur grob abgeschätzt werden, da die genaue Füllhöhe zwischen den einzelnen Fülllöchern nicht bekannt ist. Des Weiteren kann das Profil der Kokskuchenoberfläche beim Ausdrücken bestimmt werden, wobei aus den gewonnenen Daten der zuvor bei der Befüllung der Ofenkammer erreichte Schüttverlauf und der Befüllungsgrad aufgrund des Schwindverhaltens der Kokskohle bei dem Verkokungsprozess nur mit einer gewissen Unsicherheit bestimmt werden können. Darüber hinaus ist ausgehend von der nachgelagerten Auswertung des Kokskuchenprofils nur die Anpassung einer nachfolgenden Befüllung möglich, wobei eine Berücksichtigung und ein Ausgleich von nicht vollständig reproduzierbaren Schwankungen bei der Befüllung unmöglich ist.

Vor diesem Hintergrund liegt der Erfindung die Aufgabe zugrunde ein Verfahren zum Befüllen einer Ofenkammer einer Koksofenbatterie anzugeben, mit dem ein besonders gleichmäßiger Schüttungsverlauf und eine Erhöhung des Befüllungsgrades der Ofenkammer erreicht werden können.

Ausgehend von einem Verfahren mit den eingangs beschriebenen Merkmalen wird die Aufgabe erfindungsgemäß dadurch gelöst, dass durch die zumindest eine Messeinrichtung in Längsrichtung und Querrichtung der Ofenkammer kontaktlos ein dreidimensionales Füllstandsprofil ermittelt wird, wobei eine Bestimmung der Füllhöhe an diskreten Punkten erfolgt, die in Längsrichtung und Querrichtung ein Gitter bilden und wobei über die Breite der Ofenkammer in Querrichtung und den Abstand zweier Fülllöcher in Längsrichtung jeweils zumindest fünf Gitterpunkte vorgesehen sind. Durch die Bestimmung des dreidimensionalen Füllstandsprofils können unmittelbar während der Befüllung die Gleichmäßigkeit des Schüttungsverlaufs und der Befüllungsgrad genau bestimmt werden. Durch die direkte Auswertung mittels der Recheneinrichtung kann dann das zusätzlich zuzugebende Volumen an Kokskohle laufend berechnet werden, wobei abhängig von dem aktuell ermittelten Schüttungsverlauf und -volumen eine bedarfsgerechte Steuerung des Befüllvorganges ermöglicht wird, So können beispielsweise bei einer Füllvorrichtung jeweils einem Füllloch der Ofenkammer zugeordnete Förderschnecken vorgesehen sein, deren jeweilige Drehzahlen während des Befüllvorganges unabhängig voneinander gesteuert werden. Dabei kann ein bis zur maximalen Befüllung verbleibendes Leervolumen ohne Einschränkung lediglich für einen unmittelbar von der Messeinrichtung überfahrenen Abschnitt der Ofenkammer oder die gesamte Ofenkammer bestimmt werden. Bei einer schnellen Auswertung der Messsignale ist dabei auch eine direkte, während des Befüllvorgangs fortlaufende Anpassung der Steuersignale möglich.

Durch die kontaktlose Bestimmung des dreidimensionalen Füllstandsprofils ist während des Befüllvorganges frühzeitig ist eine genaue Steuerung möglich. Bei der aus der DE 10 2005 007 164 A1 bekannten Ausführung wird eine zu hohe oder zu niedrige Befüllung unter einem der Fülllöcher erst mit dem in Kontakttreten des entsprechenden Schüttkegels mit der Planierstange erkannt, wobei dann durch eine angepasste Steuerung der Drehzahlen der Förderschnecken oder ein mehrfaches Planieren mit der Planierstange eine deutliche Verzögerung des Befüllvorganges auftreten kann. Im Gegensatz dazu können erfindungsgemäß das Schüttungsprofil bereits frühzeitig mit einer sehr hohen Genauigkeit bestimmt und eine gleichmäßige Befüllung gewährleistet werden, so dass in einer vergleichsweise kurzen Füllzeit eine optimale Befüllung realisiert werden kann. Da die Messeinrichtung kontaktlos arbeitet, kann auch die Gefahr eines Verschleißes durch mechanische Beanspruchungen minimiert werden.

Die kontaktlose Bestimmung des Füllstandsprofils durch die Messeinrichtung kann beispielsweise mittels Laserstrahlen, Mikrowellen und/oder Ultraschall durch zumindest einen Messstrahl oder ein Messstrahlenbünden erfolgen. Die Messeinrichtung kann ohne Einschränkung an einem beispielsweise als Räumschild ausgebildeten Planierabschnitt am vorderen Ende der Planierstange oder einem daran anschließenden Tragabschnitt der Planierstange angeordnet sein. Die Position der Messeinrichtung in Längsrichtung kann dabei auf besonders einfache Weise aus dem Wegsignal der Planierstange bestimmt werden, welches beispielsweise von einer Steuerung der Planierstange, einer zentralen Steuereinrichtung oder einem an der Planierstange angeordneten Wegsensor bereitgestellt wird.

Bei der dreidimensionalen Bestimmung des Schüttungsverlaufes durch die Recheneinheit erfolgt üblicherweise eine Bestimmung der Füllhöhe an diskreten Punkte, die in Längsrichtung und Querrichtung der Ofenkammer ein Gitter bilden, wobei die Zwischenwerte durch Interpolation bestimmt werden können. Dabei wird der Schüttungsverlauf in Querrichtung vorzugsweise unmittelbar bis zu den Rändern der Ofenkammer ermittelt, um das Füllvolumen möglichst genau bestimmen zu können, wobei zweckmäßigerweise über die Breite der Ofenkammer in Querrichtung und den Abstand zweier Fülllöcher der Ofenkammer in Längsrichtung jeweils zumindest fünf Gitterpunkte vorgesehen sind. Vorzugsweise ist jedoch eine feinere räumliche Auflösung vorgesehen, wobei eine Auflösung, die unterhalb der typischen Korngröße der eingefüllten Kokskohle liegt, zwar mit geeigneten Messsystemen möglich aber üblicherweise nicht erforderlich ist. Optional kann auch der Abstand zu der Decke der Ofenkammer zusätzlich bestimmt werden und für die Steuerung der Befüllung und/oder als Kontrolle der korrekten Positionierung der Planierstange berücksichtigt werden.

Während bei den aus dem Stand der Technik bekannten Verfahren zu Befüllung einer Ofenkammer einer Koksofenbatterie die Planierstange stets in einer vorbestimmten Weise bewegt wird, kann in einer Weiterbildung der vorliegenden Erfindung vorgesehen sein, dass die Planierstange von der Recheneinrichtung in Abhängigkeit des ermittelten dreidimensionalen Füllstandsprofils in Längsrichtung der Ofenkammer positioniert wird, wodurch die Füllzeit weiter reduziert und das Ergebnis der Befüllung verbessert werden können.

Im Rahmen einer bevorzugten Ausgestaltung ist vorgesehen, dass an der Planierstange zumindest zwei kontaktlos arbeitende, voneinander in Längsrichtung der Planierstange beabstandete Messeinrichtungen angeordnet sind. Mit einer Vielzahl von beabstandeten Messeinrichtungen können gleichzeitig an verschiedenen Positionen in Längsrichtung der Ofenkammer Füllhöhenprofile in Querrichtung ermittelt werden, so dass während dem Befüllen insgesamt eine verbesserte Genauigkeit der Ermittlung des Schüttungsverlaufes erreicht werden kann, insbesondere da sich bei dem Füllvorgang die Füllhöhe in den verschiedenen Bereichen der Ofenkammer laufend ändert. Darüber hinaus ist auch bei einem Ausfall einer Messeinrichtung oder einem Teil der Messeinrichtungen durch die noch verbleibenden, funktionsfähigen Messeinrichtungen, wenn auch mit einer reduzierten Genauigkeit, eine Bestimmung des Schüttungsverlaufes möglich.

Trotz der innerhalb der Ofenkammer herrschenden Temperaturen, der aggressiven Gaskomponenten des innerhalb der Ofenkammer gebildeten Koksgases und der in dem Koksgas enthaltenen partikelförmigen Feststoffe ist im Rahmen des erfindungsgemäßen Verfahren überraschender Weise ein zuverlässiger Betrieb der kontaktlos arbeitenden und mit der Planierstange unmittelbar in die Ofenkammer eingebrachten Messeinrichtung möglich. Um die Zuverlässigkeit des erfindungsgemäßen Verfahrens weiter zu erhöhen, kann eine Reinigungseinrichtung für die zumindest eine Messeinrichtung vorgesehen sein. So kann die Messeinrichtung während des Befüllvorganges mit einem separat zugeführten Spülmedium, beispielsweise Luft, umspült werden. Zusätzlich oder alternativ kann auch zwischen den Befüllvorgängen verschiedener Ofenkammern einer Koksofenbatterie eine chemische und/oder mechanische Reinigung der zumindest einen Messeinrichtung vorgesehen sein. Schließlich ist es auch möglich Teile der zumindest einen Messeinrichtung derart an der Planierstange anzuordnen, dass diese auch während des Befüllvorganges außerhalb der Ofenkammer angeordnet sind. So kann die Messeinrichtung beispielsweise Spiegel, Lichtleiter, Hohlleiter oder der gleichen aufweist, wobei elektronische Bauteile der Messeinrichtung bei dem Betrieb der Planiervorrichtung außerhalb einer zu befüllenden Ofenkammer liegen.

Gegenstand der Erfindung ist auch eine Planiervorrichtung gemäß Patentanspruch 5 zur Durchführung des zuvor beschriebenen Verfahrens. Die anschließenden Ansprüche 6 bis 9 betreffen vorteilhafte Ausgestaltungen der Planiervorrichtung.

Die Erfindung wird im Folgenden anhand einer lediglich ein Ausführungsbeispiel darstellenden Zeichnung erläutert. Es zeigen schematisch:
- Fig.1: einen horizontalen Schnitt durch eine Ofenkammer einer Koksofenbatterie während eines Befüllvorganges;
- Fig.2: die Anordnung gemäß Fig.1 in einer alternativen Ausgestaltung.

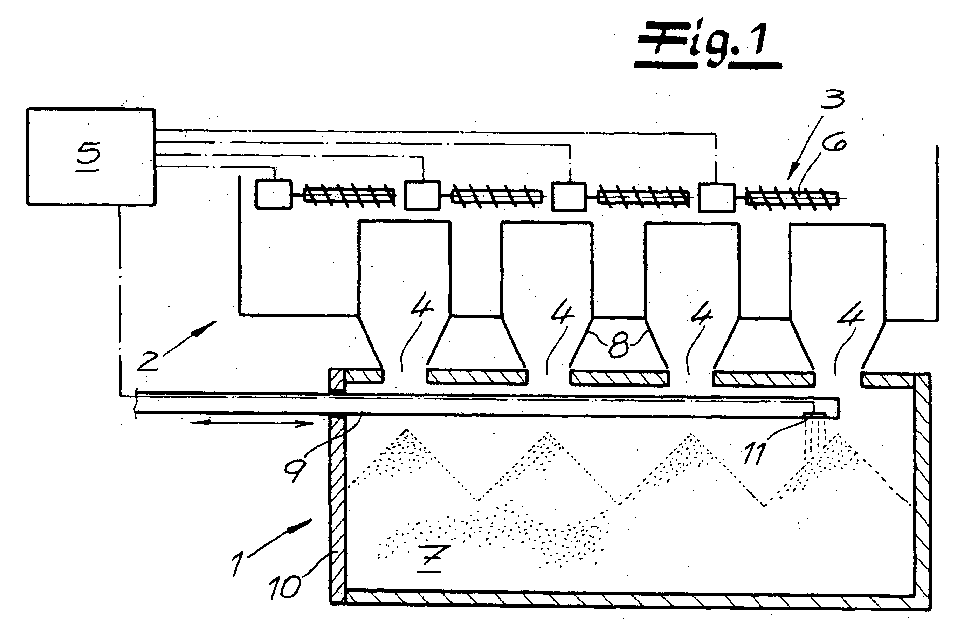

In der Fig. 1 ist eine Ofenkammer 1 einer Koksofenbatterie während eines Befüllvorganges dargestellt. Dazu ist eine auf der Koksofenbatterie verfahrbare Füllmaschine 2 mit einer Vielzahl von Fördereinrichtungen 3 vorgesehen, die jeweils einem Füllloch 4 der Ofenkammer 1 zugeordnet sind. Die Fördereinrichtungen 3 umfassen jeweils eine drehzahlgesteuerte und an eine gemeinsame Recheneinheit 5 angeschlossene Förderschnecke 6, die die Kokskohle 7 über einen Kohletrichter 8 in das zugeordnete Füllloch 4 fördert. Um eine gleichmäßige Verteilung der Kokskohle 7 in der Ofenkammer 1 zu erreichen, wird eine Planierstange 9 durch eine Planieröffnung in einer seitlichen Ofenkammertür 10 in die Ofenkammer 1 eingeführt und in Längsrichtung einund ausgefahren. An dem vorderen Ende der Planierstange 9 ist eine kontaktlos arbeitende und an die Recheneinheit 5 angeschlossene Messeinrichtung 11 angeordnet, mit der in Längsrichtung und in Querrichtung ein dreidimensionales Füllstandsprofil ermittelt wird. Aus dem für einen Teil der Ofenkammer 1 oder die gesamte Ofenkammer 1 ermittelten Füllstandsprofil wird laufend berechtet, welches Volumen an Kokskohle 7 zuzugeben ist, um eine optimale Befüllung zu erreichen, wobei durch die Recheneinheit 5 eine entsprechende Steuerung der einzeln ansprechbaren Förderschnecken 6 erfolgt.

Wie in der Fig. 1 zu erkennen ist, kann mit der Messeinrichtung 11 der Füllstand bereits frühzeitig ermittelt werden, bevor die einzelnen unter den Fülllöchern 4 gebildeten Schüttkegel die Höhe der Planierstange 9 erreichen. Insbesondere sind durch die dreidimensionale Abtastung der Oberfläche der Schüttung bis zu den Rändern der Ofenkammer 1 die Steilheit der einzelnen Schüttkegel in Längs- und Querrichtung und auch ein Versatz der Schüttkegel in Längs- und Querrichtung genau bestimmbar. Aus den Messwerten der Messeinrichtung 11 können laufend das Volumen der bereits eingefüllten Kokskohle 7 und die für eine zusätzliche Beschickung erforderliche Menge genau bestimmt werden. So kann bereits frühzeitig eine gleichmäßige Befüllung erreicht werden, wodurch die Füllzeit verringert werden kann.

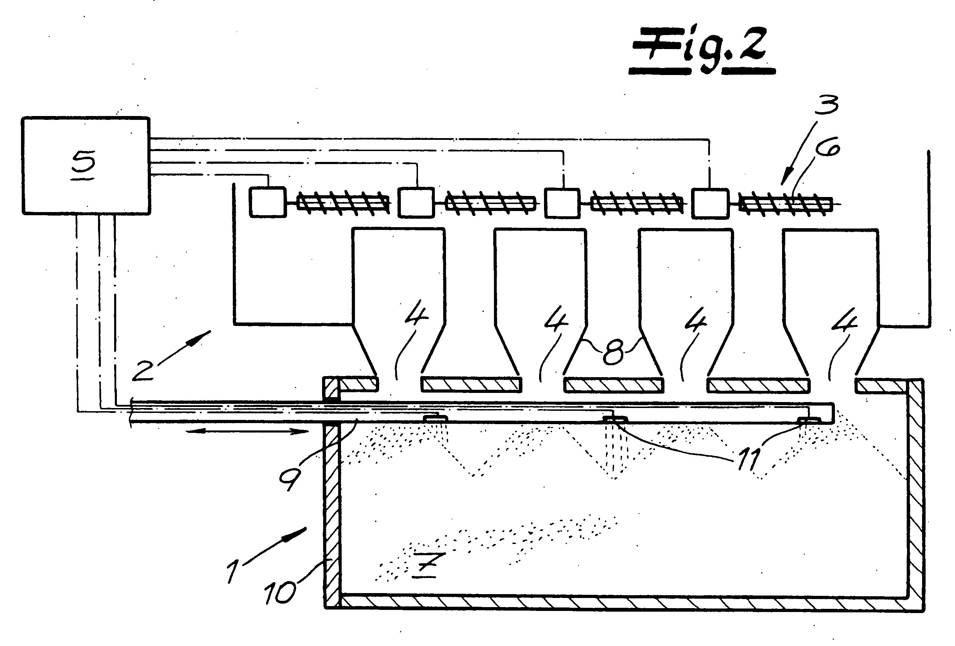

Fig. 2 zeigt eine Ausgestaltung, bei der im Unterschied zu der Fig. 1 drei Messeinrichtungen 11 in einem gleichmäßigen Abstand zueinander an der Planierstange 9 angeordnet sind. Durch die drei Messeinrichtungen 11 können gleichzeitig an verschiedenen Positionen in Längsrichtung über die Breite der Ofenkammer 1 Füllhöhenprofile aufgenommen werden, so dass die Messgenauigkeit weiter erhöht werden kann. Insbesondere ist auch bei einem Ausfall einer der Messeinrichtungen 11 in einem Notbetrieb noch eine Bestimmung der Füllhöhe durch die verbleibenden funktionsfähigen Messeinrichtungen 11 möglich.

Während bei den aus dem Stand der Technik bekannten Ausführungen die Planierstange 9 in vorbestimmter Weise ein- und ausgefahren wird, kann die Planierstange 9 erfindungsgemäß in Abhängigkeit des ermittelten dreidimensionalen Füllstandsprofils während des Befüllvorganges variabel in Längsrichtung der Ofenkammer 1 positioniert werden.

Die Bestimmung des Füllstandsprofils durch die zumindest eine Messeinrichtung 11 kann beispielsweise mittels Laserstrahlen, Mikrowellen und/oder Ultraschall erfolgen. Durch die kontaktlose Bestimmung der Füllhöhe wird auch ein mechanischer Verschleiß der Messeinrichtung 11 vermieden. Um die Zuverlässigkeit der Messeinrichtung 11 zu erhöhen kann, kann diese mittels einer Reinigungseinrichtung gereinigt oder vor Verschmutzungen geschützt werden. Des Weiteren können auch empfindliche Teile der Messeinrichtung 11 derart angeordnet werden, dass diese auch bei dem Planiervorgang während dem Befüllen außerhalb der Ofenkammer liegen.

## Patentansprüche

1. Verfahren zum Befüllen einer Ofenkammer (1) einer Koksofenbatterie, wobei mittels zumindest einer an einer Planierstange (9) angeordneten Messeinrichtung (11) und einer an die Messeinrichtung (11) angeschlossenen Recheneinheit (5) während des Füllvorganges innerhalb der Ofenkammer (1) der Schüttungsverlauf in Längsrichtung ermittelt wird und wobei abhängig von dem ermittelten Schüttungsverlauf eine zusätzliche Beschickung der Ofenkammer (1) erfolgt, **dadurch gekennzeichnet, dass** durch die Messeinrichtung (11) in Längsrichtung und Querrichtung der Ofenkammer (1) kontaktlos ein dreidimensionales Füllstandsprofl ermittelt wird, wobei eine Bestimmung der Füllhöhe an diskreten Punkten erfolgt, die in Längsrichtung und Querrichtung ein Gitter bilden und wobei über die Breite der Ofenkammer (1) in Querrichtung und den Abstand zweier Fülllöcher (4) in Längsrichtung jeweils zumindest fünf Gitterpunkte vorgesehen sind.

2. Verfahren nach Anspruch 1, **dadurch gekennzeichnet, dass** mittels der Recheneinheit (5) aus dem dreidimensionalen Füllstandsprofil für einen Abschnitt der Ofenkammer (1) oder die gesamte Ofenkammer (1) ein bis zur maximalen Befüllung verbleibendes Leervolumen berechnet wird, wobei nachfolgend während des Füllvorgangs eine Beschickung mit einer entsprechenden Zusatzfüllmenge erfolgt.

3. Verfahren nach Anspruch 1 oder 2, **dadurch gekennzeichnet, dass** die Planierstange (9) von der Recheneinheit (5) in Abhängigkeit des ermittelten dreidimensionalen Füllstandsprofils in Längsrichtung der Ofenkammer (1) positioniert wird.

4. Verfahren nach einem der Ansprüche 1 bis 3, **dadurch gekennzeichnet, dass** die Ofenkammer (1) über eine Füllmaschine (2) befüllt wird, wobei die Füllmaschine (2) eine Vielzahl von Fördereinrichtungen (3) aufweist, die jeweils einem Füllloch (4) der Ofenkammer (1) zugeordnet sind und die unabhängig voneinander durch die Recheneinheit (5) gesteuert werden.

5. Planiervorrichtung zur Durchführung eines Verfahrens nach einem der Ansprüche 1 bis 4 mit einer in eine Ofenkammer (1) einer Koksofenbatterie einführbaren Planierstange (9), **dadurch gekennzeichnet, dass** an der Planierstange (9) eine kontaktlos arbeitende und an eine Recheneinheit (5) angeschlossene Messeinrichtung (11) zur Bestimmung eines dreidimensionalen Füllstandsprofils angeordnet ist, welche über die Breite der Ofenkammer (1) in Querrichtung und den Abstand zweier Fülllöcher (4) in Längsrichtung die Aufnahme von zumindest jeweils fünf Gitterpunkten ermöglicht.

6. Planiervorrichtung nach Anspruch 5, **dadurch gekennzeichnet, dass** die Messeinrichtung (11) als Lasermesseinrichtung ausgebildet ist.

7. Planiervorrichtung nach Anspruch 5 oder 6, **dadurch gekennzeichnet, dass** an der Planierstange (9) zumindest zwei kontaktlos arbeitende, voneinander in Längsrichtung beabstandete Messeinrichtungen (11) angeordnet sind.

8. Planiervorrichtung nach einem der Ansprüche 5 bis 7, **dadurch gekennzeichnet, dass** eine Reinigungseinrichtung für die zumindest eine Messeinrichtung (11) vorgesehen ist.

9. Planiervorrichtung nach einem der Ansprüche 5 bis 8, **dadurch gekennzeichnet, dass** die zumindest eine Messeinrichtung (11) Spiegel, Lichtleiter, Hohlleiter oder dergleichen aufweist, wobei elektronische Bauteile der Messeinrichtung (11) derart angeordnet sind, dass diese bei dem Betrieb der Planiervorrichtung außerhalb einer zu befüllenden Ofenkammer (1) angeordnet sind.

## Claims

1. A method for filling an oven chamber (1) of a coke oven battery, wherein the course of the heaping in the longitudinal direction is ascertained during the filling process inside the oven chamber (1) by means of at least one measuring device (11) disposed on a levelling bar (9) and a computing unit (5) connected to the measuring device (11) and wherein additional charging of the oven chamber (1) takes place depending on the ascertained course of the heaping, **characterized in that** a three-dimensional filling level profile is ascertained contactless in the longitudinal direction and transverse direction of the oven chamber (1) by means of the measuring device (11), wherein a determination of the filling level takes place at discrete points, which constitute a grid in the longitudinal direction and transverse direction, and wherein at least five grid points are provided in each case over the width of the oven chamber (1) in the transverse direction and over the distance between two filling holes (4) in the longitudinal direction.

2. The method according to claim 1, **characterized in that** an empty volume remaining until maximum filling is calculated by means of the computing unit (5) from the three-dimensional filling level profile for a section of the oven chamber (1) or the entire oven chamber (1), wherein charging with a corresponding additional filling quantity subsequently takes place during the filling process.

3. The method according to claim 1 or 2, **characterized in that** the levelling bar (9) is positioned by the computing unit (5) depending on the ascertained three-dimensional filling level profile in the longitudinal direction of the oven chamber (1).

4. The method according to any one of claims 1 to 3, **characterized in that** the oven chamber (1) is filled by means of a filling machine (2), wherein the filling machine (2) comprises a plurality of conveying devices (3), which are each assigned to a filling hole (4) of the oven chamber (1) and which are controlled independently of one another by the computing unit (5).

5. A levelling device for performing a method according to any one of claims 1 to 4 with a levelling bar (9) which can be introduced into a oven chamber (1) of a coke oven battery, **characterized in that** a measuring device (11) for determining a three-dimensional filling level profile, which operates contactless and is connected to a computing unit (5), is disposed on the levelling bar (9), said measuring device enabling the detection of at least five grid points in each case over the width of the oven chamber (1) in the transverse direction and over the distance between two filling holes (4) in the longitudinal direction.

6. The levelling device according to claim 5, **characterized in that** the measuring device (11) is constituted as a laser measuring device.

7. The levelling device according to claim 5 or 6, **characterized in that** at least two measuring devices (11) operating contactless and spaced apart from one another in the longitudinal direction are disposed on the levelling bar (9).

8. The levelling device according to any one of claims 5 to 7, **characterized in that** a cleaning device is provided for the at least one measuring device (11).

9. The levelling device according to any one of claims 5 to 8, **characterized in that** the at least one measuring device (11) comprises mirrors, light guides, wave guides or suchlike, wherein electronic components of the measuring device (11) are disposed in such a way that the latter are disposed outside an oven chamber (1) to be filled during the operation of the levelling device.

## Revendications

1. Procédé pour remplir une chambre de four (1) d'une batterie de fours à coke, dans lequel au moyen d'au moins un dispositif de mesure (11) disposé sur une barre de nivellement (9) et une unité de calcul (5) raccordée au dispositif de mesure (11), on détermine l'allure de la charge dans le sens longitudinal au cours du processus de remplissage à l'intérieur de la chambre de four (1) et dans lequel a lieu un chargement supplémentaire de la chambre de four (1) en fonction de l'allure de la charge déterminée, **caractérisé en ce qu'**un profil d'état de remplissage tridimensionnel est déterminé sans contact par le dispositif de mesure (11) dans le sens longitudinal et dans le sens transversal de la chambre de four (1), dans lequel a lieu une détermination de la hauteur de remplissage à des points discrets, qui forment une grille dans le sens longitudinal et dans le sens transversal et dans lequel sont respectivement prévus au moins cinq points de grille sur la largeur de la chambre de four (1) dans le sens transversal et dans l'intervalle entre deux orifices de remplissage (4) dans le sens longitudinal.

2. Procédé selon la revendication 1, **caractérisé en ce qu'**au moyen de l'unité de calcul (5) un volume de vide restant jusqu'au remplissage maximal est calculé à partir du profil d'état de remplissage tridimensionnel pour une section de la chambre de four (1) ou toute la chambre de four (1), dans lequel a lieu par la suite au cours du processus de remplissage un chargement avec une quantité de remplissage supplémentaire correspondante.

3. Procédé selon la revendication 1 ou 2, **caractérisé en ce que** la barre de nivellement (9) est positionnée dans le sens longitudinal de la chambre de four (1) par l'unité de calcul (5) en fonction du profil d'état de remplissage tridimensionnel déterminé.

4. Procédé selon l'une quelconque des revendications 1 à 3, **caractérisé en ce que** la chambre de four (1) est remplie par une remplisseuse (2), dans lequel la remplisseuse (2) comporte une pluralité de systèmes de transport (3) qui sont respectivement attribués à un orifice de remplissage (4) de la chambre de four (1) et qui sont pilotés indépendamment les uns des autres par l'unité de calcul (5).

5. Dispositif de nivellement pour mettre en oeuvre un procédé selon l'une quelconque des revendications 1 à 4 avec un barre de nivellement (9) pouvant être introduite dans une chambre de four (1) d'une batterie de fours à coke, **caractérisé en ce que** sur la barre de nivellement (9) est disposée un dispositif de mesure (11) fonctionnant sans contact et raccordé à une unité de calcul (5) pour déterminer un profil d'état de remplissage tridimensionnel, lequel permet d'enregistrer respectivement au moins cinq points de grille sur la largeur de la chambre de four (1) dans le sens transversal et dans le sens longitudinal dans l'intervalle entre deux orifices de remplissage (4).

6. Dispositif de nivellement selon la revendication 5, **caractérisé en ce que** le dispositif de mesure (11) est constitué comme un dispositif de mesure à laser.

7. Dispositif de nivellement selon la revendication 5 ou 6, **caractérisé en ce qu'**au moins deux systèmes de mesure (11) fonctionnant sans contact, à distance l'un de l'autre dans le sens longitudinal sont disposés sur la barre de nivellement (9).

8. Dispositif de nivellement selon l'une quelconque des revendications 5 à 7, **caractérisé en ce qu'**un dispositif de nettoyage est prévu pour le au moins un dispositif de mesure (11).

9. Dispositif de nivellement selon l'une des revendications 5 à 8, **caractérisée en ce que** le au moins un dispositif de mesure (11) comporte des miroirs, des guides de lumière, des guides d'ondes ou systèmes analogues, dans lequel des composants électroniques du dispositif de mesure (11) sont disposés de telle sorte que lors du fonctionnement du dispositif de nivellement, ceux-ci sont disposés en dehors d'une chambre de four (1) à remplir.
